(19) Europäisches Patentamt / European Patent Office / Office européen des brevets

(11) **EP 4 383 871 A1**

(12) **EUROPEAN PATENT APPLICATION**
published in accordance with Art. 153(4) EPC

(43) Date of publication:
**12.06.2024 Bulletin 2024/24**

(21) Application number: **22852166.2**

(22) Date of filing: **02.08.2022**

(51) International Patent Classification (IPC):
*H04W 72/02* $^{(2009.01)}$

(52) Cooperative Patent Classification (CPC):
**H04W 72/02**

(86) International application number:
**PCT/CN2022/109660**

(87) International publication number:
**WO 2023/011454 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.08.2021 CN 202110882833**

(71) Applicant: **Vivo Mobile Communication Co., Ltd. Dongguan, Guangdong 523863 (CN)**

(72) Inventors:
• **YANG, Yuming**
  **Dongguan, Guangdong 523863 (CN)**
• **PENG, Shuyan**
  **Dongguan, Guangdong 523863 (CN)**
• **LIU, Siqi**
  **Dongguan, Guangdong 523863 (CN)**

(74) Representative: **Lavoix**
  **Bayerstraße 83**
  **80335 München (DE)**

(54) **SIDELINK RESOURCE DETERMINING METHOD AND APPARATUS, TERMINAL, AND STORAGE MEDIUM**

(57) This application discloses a sidelink resource determining method and apparatus, a terminal, and a storage medium, and pertains to the field of communications technologies. The sidelink resource determining method in an embodiment of this application includes: determining, by a receiving terminal, a PSFCH resource or a PSFCH candidate resource according to a physical sidelink feedback channel PSFCH mapping rule; where the PSFCH mapping rule satisfies at least one of the following: PSFCH mapping is performed in M PSFCH periods, where M is an integer greater than 1; and a resource location of the PSFCH resource or PSFCH candidate resource is dynamically indicated.

A receiving terminal determines a PSFCH resource or a PSFCH candidate resource according to a physical sidelink feedback channel PSFCH mapping rule ⟋ 201

FIG. 2

EP 4 383 871 A1

## Description

## CROSS-REFERENCE TO RELATED APPLICATIONS

This application claims priority to Chinese Patent Application No. 202110882833.5, filed in China on August 02, 2021, which is incorporated herein by reference in its entirety.

## TECHNICAL FIELD

This application relates to the field of communications technologies, and in particular, to a sidelink resource determining method and apparatus, a terminal, and a storage medium.

## BACKGROUND

With the development of communication systems, applications based on sidelink transmission are becoming increasingly widespread. In future communication systems, shared spectrum, such as unlicensed bands (unlicensed band), can be used as a supplement to licensed bands (licensed band) to help operators expand their services. However, how the physical sidelink feedback channel (physical sidelink feedback channel, PSFCH) transmission is implemented in unlicensed bands has become an urgent problem that needs to be addressed.

## SUMMARY

Embodiments of this application provide a sidelink resource determining method and apparatus, a terminal, and a storage medium, so as to address the issue of implementing PSFCH transmission in an unlicensed band.

According to a first aspect, a sidelink resource determining method is provided, including:

determining, by a receiving terminal, a PSFCH resource or a PSFCH candidate resource according to a physical sidelink feedback channel PSFCH mapping rule; where the PSFCH mapping rule satisfies at least one of the following:

PSFCH mapping is performed in M PSFCH periods, where M is an integer greater than 1; and a resource location of the PSFCH resource or PSFCH candidate resource is dynamically indicated.

According to a second aspect, a sidelink resource determining apparatus is provided, including:

a determining module, configured to determine a PSFCH resource or a PSFCH candidate resource according to a physical sidelink feedback channel PSFCH mapping rule; where the PSFCH mapping rule satisfies at least one of the following:

PSFCH mapping is performed in M PSFCH periods, where M is an integer greater than 1; and a resource location of the PSFCH resource or PSFCH candidate resource is dynamically indicated.

According to a third aspect, a terminal is provided, including a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communication interface, where

the processor is configured to determine a PSFCH resource or a PSFCH candidate resource according to a physical sidelink feedback channel PSFCH mapping rule; where the PSFCH mapping rule satisfies at least one of the following:

PSFCH mapping is performed in M PSFCH periods, where M is an integer greater than 1; and a resource location of the PSFCH resource or PSFCH candidate resource is dynamically indicated.

According to a fifth aspect, a readable storage medium is provided, where the readable storage medium stores a program or instructions, and when the program or instructions are executed by a processor, the steps of the method according to the first aspect are implemented.

According to a sixth aspect, an embodiment of this application provides a chip, where the chip includes a processor and a communication interface, the communication interface is coupled to the processor, and the processor is configured to run a program or instructions so as to implement the steps of the method according to the first aspect.

According to a seventh aspect, a computer program/program product is provided, where the computer program/program product is stored in a non-transient storage medium, and the computer program/program product is executed by at least one processor so as to implement the method according to the first aspect.

According to a tenth aspect, a communication device is provided, configured to execute the method according to the first aspect.

In the embodiments of this application, a receiving terminal determines a PSFCH resource or a PSFCH candidate resource according to a physical sidelink feedback channel PSFCH mapping rule; where the PSFCH mapping rule satisfies at least one of the following: PSFCH mapping is performed in M PSFCH periods, where M is an integer greater than 1; and a resource location of the PSFCH resource or PSFCH candidate resource is dynamically indicated. In this way, PFSCH transmission can be implemented in an unlicensed band. In addition, the reliability of PSFCH transmission can be guaranteed.

**BRIEF DESCRIPTION OF DRAWINGS**

FIG. 1 is a structural diagram of a network system to which the embodiments of this application are applicable;
FIG. 2 is a flowchart of a sidelink resource determining method according to an embodiment of this application;
FIG. 3 is a first example diagram of a location of a PSFCH feedback resource corresponding to a PSSCH in a sidelink resource determining method provided in an embodiment of this application;
FIG. 4 is a second example diagram of a location of a PSFCH feedback resource corresponding to a PSSCH in a sidelink resource determining method provided in an embodiment of this application;
FIG. 5 is a third example diagram of a location of a PSFCH feedback resource corresponding to a PSSCH in a sidelink resource determining method provided in an embodiment of this application;
FIG. 6 is a fourth example diagram of a location of a PSFCH feedback resource corresponding to a PSSCH in a sidelink resource determining method provided in an embodiment of this application;
FIG. 7 is a fifth example diagram of a location of a PSFCH feedback resource corresponding to a PSSCH in a sidelink resource determining method provided in an embodiment of this application;
FIG. 8 is a sixth example diagram of a location of a PSFCH feedback resource corresponding to a PSSCH in a sidelink resource determining method provided in an embodiment of this application;
FIG. 9 is a structural diagram of a sidelink resource determining apparatus according to an embodiment of this application;
FIG. 10 is a structural diagram of a communication device according to an embodiment of this application; and
FIG. 11 is a structural diagram of a terminal according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. These technologies may also be applied to other applications than an NR system application, for example, the 6th generation (6th Generation, 6G) communication system.

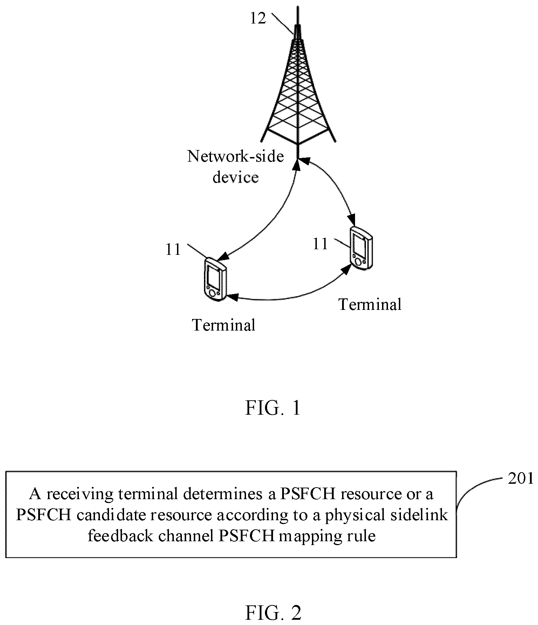

FIG. 1 is a block diagram of a wireless communications system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network device, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved Node B, eNB), a home NodeB, a home evolved NodeB, a wireless local area network (Wireless Local Area network, WLAN) access point, WiFi node, a transmission-reception point (Transmitting Receiving Point, TRP), or some other appropriate term in the art. As long as the same technical effects are achieved, the base station is not limited to any specific technical term. It should be noted that the base station in the NR system is used as an only example in the embodiments of this application, and the base station is not limited to any specific type.

For ease of understanding, the following describes some content included in the embodiments of this application:

I. Shared band

A shared band can be referred as an unlicensed band. In order to align with NR deployment and maximize NR-based unlicensed band access, the unlicensed band may be 5 GHz, 37 GHz, or 60 GHz band. Since unlicensed bands are shared by a plurality of radio access technologies (Radio Access Technology, RATs), such as Wi-Fi, radar, and LET-licensed assisted access (Licensed-Assisted Access, LAA), in some countries or regions, usage of the unlicensed bands must comply with regulations (regulation) to ensure that all devices can use the resource fairly. The regulations include, for example, listen before talk (listen before talk, LBT) and maximum channel occupancy time (maximum channel occupancy time, MCOT). When needing to send information, a transmission node needs to perform LBT first to perform energy detection (energy detection, ED) on surrounding nodes. When detected power is lower than a threshold, a channel is considered idle (idle) and the transmission node can send information. Otherwise, the channel is considered busy and the transmission node cannot send information. The transmission node may be a base station, a UE, a Wi-Fi access point (Access Point, AP), or the like. After the transmission node starts the transmission, a channel occupancy time (channel occupancy time, COT) cannot be greater than the MCOT.

Commonly used categories (category) of LBT may include category 1 (Cat 1), category 2 (Cat 2), and category 4 (Cat 4). In Category 1 LBT, a sending node does not perform LBT, which means that no LBT or immediate transmission (immediate transmission) is performed. Category 2 LBT is one-shot (one-shot) LBT, that is, a node performs LBT once before transmission, and if the channel is idle, transmission is performed; and if the channel is busy, no transmission is performed. Category 4 LBT is a back-off based channel listening mechanism. When detecting that a channel is busy, the transmission node performs back-off and continues to listen until it detects that a channel is idle. For a gNB, Category 2 LBT is applied to physical downlink shared channel (physical downlink shared channel, PDSCH) without a demodulation reference signal (Demodulation Reference Signal, DRS), and category 4 LBT is applied to PDSCH, physical downlink control channel (Physical downlink control channel, PDCCH), and enhanced PDCCH (ePDCCH). For a UE, category 4 LBT corresponds to a type 1 uplink access procedure (type1 UL channel access procedure), and category 2 LBT corresponds to a type 2 uplink access procedure (type2 UL channel access procedure). Cat 2 LBT includes 16us Cat 2 LBT and 25us Cat 2 LBT.

II. Network operation of load based equipment (load based equipment, LBE)

Frame based equipment (frame based equipment, FBE) is a device where the transmission/reception timing of the equipment adopts a periodic structure, with a periodicity being a fixed frame period (Fixed Frame Period, FFP).

An FBE node occupies a channel through a LBT-based channel access mechanism. The node that initiates a transmission sequence containing one or more consecutive transmissions is called an initiating device (Initiating Device), and other nodes are called responding devices (Responding Device). An FBE node may be an initiating device, a responding device, or a node supporting functions of both nodes.

For an LBE, the transmission node can start LBT at any time and can start transmission only after it detects that a channel is idle. For a transmission node, there is no fixed listening time, and there is no need to skip a channel when the channel is detected as busy. The listening can be continued after the backoff (backoff) of several extended clear channel assessments (Extended Clear Channel Assessment, eCCA), until the counter (counter) of eCCA becomes zero.

III. PSFCH

A UE transmits a PSFCH carrying hybrid automatic repeat request acknowledgement (Hybrid automatic repeat request acknowledgement, HARQ-ACK) information on one or more subchannels (sub-channel). As an acknowledgement to reception of a physical sidelink shared channel (physical sidelink shared channel, PSSCH), the transmitted HARQ-ACK information is an acknowledgement (Acknowledgement, ACK) or a negative acknowledgement (Negative Acknowledge, NACK), or just a NACK. The UE obtains a PSFCH resource period through a period PSFCH resource (period PSFCH resource), where its value N = 0/1/2/4 slots (slots). When the parameter value is 0, the UE transmits no PSFCH.

If the UE receives a PSSCH in a resource pool, and sidelink control information (Sidelink Control Information, SCI) format (format) 0_2 for scheduling the PSSCH reception indicates that the UE is to report the HARQ-ACK information, the UE has the HARQ-ACK information carried on a resource for PSFCH transmission. A processing delay between the last slot for reception of PSSCH data and a slot for transmission of a corresponding PSFCH by the UE is obtained through a parameter minimum time gap PSFCH (MinTimeGapPSFCH), with a value k = 2 or 3 slots.

Resource blocks (Resource Block, RB) for PSFCH transmission in a resource pool are classified based on slot indexes and subchannel indexes. There are two mapping manners, that is, two HARQ feedback mechanisms, between a PSSCH and a corresponding PSFCH feedback resource.

IV HARQ feedback mechanism

Case 1: The HARQ-ACK information is transmitted only on a PSFCH resource corresponding to an initial subchannel in subchannels occupied by PSSCH data.

Case 2: The HARQ-ACK information is transmitted on PSFCH resources corresponding to all subchannels occupied by PSSCH data.

The UE determines a resource index for PSFCH transmission based on a receive identifier (Identifier, ID) and a transmit ID. Cyclic shift pairs are introduced, that is, code division technology is used for expanding resources for PSFCH transmission.

The following describes in detail a sidelink resource determining method provided in embodiments of this application by using some embodiments and application scenarios thereof with reference to the accompanying drawings.

Referring to FIG. 2, FIG. 2 is a flowchart of a sidelink resource determining method according to an embodiment of this application. As shown in FIG. 2, the method includes the following step.

Step 201: A receiving terminal determines a PSFCH resource or a PSFCH candidate resource according to a physical sidelink feedback channel PSFCH mapping rule; where
the PSFCH mapping rule satisfies at least one of the following:

PSFCH mapping is performed in M PSFCH periods, where M is an integer greater than 1; and

a resource location of the PSFCH resource or PSFCH candidate resource is dynamically indicated.

The foregoing receiving terminal may be understood as a receiving terminal of PSSCH. After determining the PSFCH resource or the PSFCH candidate resource, the receiving terminal can perform PSFCH transmission based on the determined PSFCH resource or PSFCH candidate resource, where the PSFCH can be understood as a channel for carrying feedback information for the PSSCH transmission, for example, the feedback information may include HARQ-ACK information.

It should be understood that in this embodiment of this application, that PSFCH mapping is performed in M physical sidelink feedback channel PSFCH periods can be understood as a first mapping rule, and that PSFCH mapping is performed based on a dynamically indicated resource location can be understood as a second mapping rule.

In a case that persistent or semi-persistent scheduling transmission is adopted, the first mapping rule can be used for mapping. In a case of persistent or semi-persistent scheduling transmission, PSFCH mapping is performed based on M PSFCH periods, so that the number of locations of candidate PSFCH resources can be increased, thus improving the reliability of transmitting PSFCH in unlicensed bands.

In a case that dynamic scheduling transmission is adopted, the second rule can be used for mapping. In this case, the PSFCH transmission can be dynamically scheduled according to the situation of candidate resources, so as to avoid PSFCH transmission failure caused by unavailability of a selected candidate resource. Therefore, this embodiment of this application improves the reliability of the PSFCH transmission.

It should be noted that the PSFCH resource or PSFCH candidate resource determined by the receiving terminal can be understood as a resource in an unlicensed band.

In this embodiment of this application, the receiving terminal performs the PSFCH mapping operation according to the PSFCH mapping rule; and the receiving terminal transmits the PSFCH on an unlicensed band; where the PSFCH mapping rule satisfies at least one of the following requirements: PSFCH mapping is performed in M physical sidelink feedback channel PSFCH periods, where M is an integer greater than 1; and PSFCH mapping is performed according to a dynamically indicated resource location. In this way, PFSCH transmission can be implemented in an unlicensed band. In addition, the reliability of PSFCH transmission can be guaranteed.

Optionally, a value of M is associated with at least one of the following: maximum number of retransmissions, number of blind retransmissions, channel occupancy ratio (channel occupancy ratio, CR), channel busy ratio (channel busy ratio, CBR), hybrid automatic repeat request HARQ feedback mechanism, cast type (cast type), number of receiving terminals, and number of terminals providing PSFCH feedback.

Optionally, during a first preset time period in the M PSFCH periods, a maximum number of transmissions of a first PSFCH in time domain is K, where K is a positive integer less than or equal to M.

Optionally, K transmission locations of the first PSFCH in the M PSFCH periods include:

PSFCH transmission locations in most recent P PSFCH periods satisfying a first preset condition, where P is a natural number less than or equal to K; and PSFCH transmission locations in K-P PSFCH periods satisfying a second preset condition; where the P PSFCH periods do not include any one of the K-P PSFCH periods.

In this embodiment of this application, P may be 1, which means the most recent one PSFCH period and K-1 PSFCH periods satisfying the second preset condition, where the most recent PSFCH period is used for the timely feedback, and the other K-1 PSFCH periods are candidate periods for avoiding CCA failure.

Optionally, the first preset condition and the second preset condition each include at least one of the following:

a time gap between a PSFCH transmission location and a corresponding physical sidelink control channel (physical sidelink control channel, PSCCH) or PSSCH is greater than or equal to a data processing time;
the time gap between the PSFCH transmission location and the corresponding PSCCH or PSSCH is greater than or equal to a PSFCH transmission processing time;
the time gap between the PSFCH transmission location and the corresponding PSCCH or PSSCH is greater than or equal to T1;
the time gap between the PSFCH transmission location and the corresponding PSCCH or PSSCH is greater than or equal to T3; and
the time gap between the PSFCH transmission location and the corresponding PSCCH or PSSCH is greater than or equal to a remaining channel occupancy time, or the time gap between the PSFCH transmission location and the corresponding PSCCH or PSSCH is less than or equal to the remaining channel occupancy time.

In this embodiment of this application, T1 may be understood as the starting location of the resource selection window, and T3 can be understood as a gap between re-evaluated preemption and the selected resource. Optionally, for different transmission scenarios, a relationship between the time gap between the PSFCH transmission location and the corresponding PSCCH or PSSCH and the remaining channel occupancy time can be different. For example, in some embodiments, to avoid the currently occupied COT, for persistent scheduling transmission, the time gap between the PSFCH transmission location and the corresponding PSCCH or PSSCH is greater than or equal to the remaining channel occupancy time; and for semi-persistent scheduling transmission, the time gap between the PSFCH transmission location and the corresponding PSCCH or PSSCH is greater than or equal to the remaining channel occupancy time. In some embodiments, due to COT sharing, it can also be configured as follows: for semi-persistent scheduling transmission, the time gap between the PSFCH transmission location and the corresponding PSCCH or PSSCH is less than or equal to the remaining channel occupancy time; and for persistent scheduling transmission, the time gap between the PSFCH transmission location and the corresponding PSCCH or PSSCH is less than or equal to the remaining channel occupancy time.

Optionally, in some embodiments, the second preset condition further includes at least one of the following:

a time gap between transmission locations of any two adjacent PSFCH periods is greater than or equal to a channel occupancy time; and
duration of the PSFCH period is greater than a maximum channel occupancy time or the remaining channel occupancy time.

Optionally, the P PSFCH periods and the K-P PSFCH periods satisfy at least one of the following:

channel access priority class (Channel Access Priority Class, CAPC) rules are different;
time conditions that need to be satisfied are different; and
transmit powers are different.

In this embodiment of this application, the CAPC rules satisfy:

CAPC rules of the P PSFCH periods are determined based on at least one of channel busy ratio CBR, channel occupancy ratio CR, number of terminals providing PSFCH feedback, PSCCH corresponding to a PSFCH, and PSSCH corresponding to the PSFCH; and
CAPC rules of the K-P PSFCH periods are determined based on at least one of channel busy ratio CBR, channel occupancy ratio CR, and number of terminals providing PSFCH feedback.

It should be understood that the CAPC is adjusted in the later K-P PSFCH periods, thus reducing the congestion degree of the system and improving the transmission reliability.

Optionally, the first preset time period is at least one of the following: M PSFCH periods, remaining channel occupancy time, preset time window, and time period associated with a preset timer.

Optionally, a value of K and K first identifier values are agreed in a protocol, preconfigured by a network-side device, configured by a network-side device, indicated by a network-side device, or indicated by a terminal; where

the first identifier value is a value of an identifier of a PSFCH period corresponding to a transmission location of the first PSFCH.

It should be noted that in a case that the first identifier value is indicated by a network-side device or a terminal, the first identifier value is indicated by radio resource control (Radio Resource Control, RRC), media access control control element (Media Access Control Control Element, MAC CE), downlink control information (Downlink Control Information, DCI), or sidelink control information (Sidelink Control Information, SCI).

It should be understood that the value of K can be indicated in the same way as the first identifier value.

Optionally, in a case that the first identifier value is indicated by DCI, the bit (bit) information of the indicated first identifier value may be reserved bit (reserved bits) of the current DCI or a newly added specific indication field.

Similarly, in a case that the first identifier value is indicated by SCI, the bit information of the indicated first identifier value may be reserved bit of the current SCI or a newly added specific indication field.

Optionally, the PSFCH resource or the PSFCH candidate resource totally occupies M1 physical resource blocks (physical resource block, PRB), where M1 is a positive integer, and M1 satisfies at least one of the following:

> M1 is a parameter agreed in a protocol, preconfigured by a network-side device, configured by a network-side device, configured by a terminal, or preconfigured by a terminal; or M1 is indicated by indication information carried in RRC, MAC CE, DCI, or SCI; and
> M1 is associated with at least one of PSFCH period, PSFCH scheduling period, maximum number of transmissions of one PSFCH in time domain, PSFCH feedback mechanism, number of PRBs of a PSSCH corresponding to a PSFCH, number of interlaces of the PSSCH corresponding to the PSFCH, and minimum number of resource blocks RBs required for occupied channel bandwidth, where the PSFCH scheduling period is the M PSFCH periods.

It should be noted that M1 being associated with the PSFCH feedback mechanism can be understood as whether the HARQ-ACK information is transmitted on the PSFCH resources corresponding to only the start subchannel or all subchannels occupied for PSSCH data.

Optionally, for a PSSCH slot associated with a time domain location of PSFCH transmission and a first object, a transmission resource corresponding to the first object on the PSSCH slot is L PRBs among the M1 PRBs, where the first object is a subchannel or an interlace (interlace), L being a positive integer.

Optionally, in some embodiments, the L PRBs are PRBs with an index range of [(slot_index+j*N)* L, (slot_index+1+j*N)*L-1] among the M1 PRBs, where slot_index represents an index value of the PSSCH slot, j represents an index value of the subchannel or interlace, and N represents the number of slots in a PSFCH period.

Optionally, the index value of the PSSCH slot satisfies any one of the following:

> being determined based on a slot location in one PSFCH scheduling period associated with the PSFCH; and
> being determined based on a slot location in K PSFCH periods associated with the PSFCH, where K represents a maximum number of transmissions of one PSFCH in time domain.

In this embodiment of this application, slot_index = i + m * N, where i represents the slot index (index) in each PSFCH period, and m represents the m-th PSFCH period currently located in the PSFCH scheduling period.

Optionally, in some embodiments, the L PRBs are PRBs among the M1 PRBs, with an index range of [(slot_index+j*N)* L,(slot_index+1+j*N)*L-1] in each PSFCH period, where slot_index represents an index value of the PSSCH slot, j represents an index value of the subchannel or the interlace, and N represents the number of slots in a PSFCH period.

In this embodiment of this application, the index value of the PSSCH slot is determined based on a slot location in one PSFCH period associated with the PSFCH.

Optionally, the index value of the subchannel or the interlace satisfies any one of the following:

> the index value of the subchannel or the interlace in a slot; and
> a frequency-domain order of subchannels with data or interlaces in a slot.

Optionally, the value of L satisfies:

$$L = \frac{M1}{(N_f * N)},$$

where $N_f$ represents the total number of first objects in one slot in frequency domain, the first object being a subchannel or an interlace.

Optionally, in a case of performing PSFCH mapping in M physical sidelink feedback channel PSFCH periods, the PSFCH mapping rule further satisfies at least one of the following:

> time-frequency domain resources of the PSFCH are contiguous or non-contiguous;
> mapping is performed in ascending or descending order of slot index values of PSSCH slots and in ascending or descending order of index values of first objects; and
> time-frequency domain mapping is performed on basis of PSFCH period.

In this embodiment of this application, the specific mapping order may be any one of the following:

> performing mapping first in ascending/descending order of slot_index of PSSCH/PSCCH, and then in ascending/descending order of subchannel/interlace index in frequency domain;
> performing mapping first in ascending/descending order of subchannefl/interlace index in frequency domain, and then in ascending/descending order of slot_index;
> starting the mapping by PSFCH period index: first in ascending/descending order of slot i in a PSFCH period, and then in ascending/descending order of subchannel/interlace index in frequency domain, and then performing mapping in the next PSFCH period; and
> starting the mapping by PSFCH period index: first in ascending/descending order of subchannel/interlace index in frequency domain, and then in ascending/descending order of slot i in a PSFCH period, and then performing mapping in the next PSFCH period.

Optionally, one PSFCH transmission occupies R transmission resources, and R satisfies: $R=N_{type}*L*N_{cs}$, where $N_{type}$ represents a target value corresponding to a feedback mechanism, and $N_{cs}$ represents the number of cyclic shift pairs. In this embodiment of this application, L may be related to interlace.

Optionally, in this embodiment of this application, $N_{cs}$ is associated with the PSFCH scheduling period or the maximum number of transmissions K of one PSFCH in time domain. In other embodiments, $N_{cs}$ may alternatively be not associated with the PSFCH scheduling period or the maximum number of transmissions K of one PSFCH in time domain.

Optionally, a PSFCH sequence on the R transmission resources is a repetition of a sequence or a sequence with different cyclic values shifted.

It should be noted that in some embodiments, the foregoing cyclic values are related to K, M or a resource block index, or are agreed in a protocol, configured by a network-side device, or preconfigured by a network-side device.

In this embodiment of this application, the frequency domain mapping between PSFCH resources and UE locations satisfies at least one of the following:

The calculation of the index of the PSFCH corresponding to the PSCCH/PSSCH transmission of the UE is related to K/M, for example, (PID + MID + M)modR, where PID and MID are the same as those defined in the protocol.

The UE is used to calculate the cyclic value of the PSFCH feedback resource index, and the cyclic value is related to K/M.

Optionally, in a case that PSFCH mapping is performed in M physical sidelink feedback channel PSFCH periods and that a frequency domain location of a PFSCH is associated with a second object, the mapping rule further satisfies:

> mapping starts from a frequency domain location corresponding to a lowest or highest interlace of the second object; where
> the second object is a PSSCH or a PSCCH.

For example, $M_{total}$ PRB resources are allocated, where $M_{total}$ is related to K/M/N and/or the number of interlaces of the PSCCH/PSSCH.

When an interlace structure is adopted: the number of RBs corresponding to each PSFCH in frequency domain is $M_{UE}$, where $M_{UE}$ is related to K/M/N and/or the number of interlaces of the PSCCH/PSSCH.

In this embodiment of this application, the mapping can be performed in $M_{total}$ PRB resources in time domain order.

Optionally, the number of frequency domain radio bearers RBs or interlaces resulting from interlacing corresponding to one PSFCH transmission, $M_{UE}$, satisfies any one of the following:

> $M_{UE}$ is equal to a minimum number of RBs $M_{OCB}$ required for occupied channel bandwidth;

$$M_{UE} = \frac{M_{OCB}}{N};$$

> and

$$M_{UE} = \frac{M_{OCB}}{K*N};$$

> where

> K represents the maximum number of transmissions of one PSFCH in time domain, and N represents the number of slots in a PSFCH period.

In this embodiment of this application, at least the requirement of occupied channel bandwidth (occupy channel bandwidth, OCB) can be satisfied even in a case that only one PSFCH is present, so that the channel is not preempted by other devices.

Optionally, in some embodiments, the resource location includes a time domain location and a frequency domain location.

In this embodiment of this application, the time domain location is indicated by first indication information, and the first indication information is used to indicate any one of the following:

> a slot index value of a feedback PSFCH resource corresponding to the second object;
> a slot offset value of the feedback PSFCH resource corresponding to the second object; and
> a PSFCH period offset value of the feedback PSFCH resource corresponding to the second object; where the first indication information is carried in SCI or DCI, and the second object is a PSSCH or a PSCCH.

In this embodiment of this application, in a case that the time domain location is indicated by SCI/DCI, the slot index/slot offset value/PSFCH period offset value of the feedback PSFCH resource corresponding to the PSCCH/PSSCH can be indicated.

Optionally, in a case that the time domain location is indicated by SCI, the indication information occupies the reserve bits of the 1st SCI or a new indication field is added in the 2nd SCI. In a case that the time domain location is indicated by DCI, a new indication field is added to DCI.

Optionally, the frequency domain location is indicated by the second indication information; where the second indication information is used to indicate any one of the following: the frequency domain index value of the feedback PSFCH resource corresponding to the second object; and the frequency domain offset value of the feedback PSFCH resource corresponding to the second object; where

the second indication information is carried in sidelink control information or downlink control information, and the second object is a PSSCH or a PSCCH.

In this embodiment of this application, in a case that the frequency domain location is indicated by SCI/DCI, the frequency domain index/frequency domain offset value of the feedback PSFCH resource corresponding to the PSCCH/PSSCH is indicated.

Optionally, in a case that the time domain location is indicated by SCI, the indication information occupies the reserve bits of the 1st SCI or a new indication field is added in the 2nd SCI. In a case that the time domain location is indicated by DCI, a new indication field is added to DCI.

Optionally, the PSFCH mapping rule is agreed in a protocol, preconfigured by a network-side device, configured by a network-side device, preconfigured by a terminal, or configured by a terminal.

In this embodiment of this application, the selection or switching of the PSFCH mapping rule may be determined by at least one of the following:

protocol predefinition, network preconfiguration, network configuration, terminal preconfiguration, or terminal configuration.

Q-bit information is carried in the DCI or SCI for indicating the current mapping rule of the PSFCH, where Q is a positive integer.

For better understanding of this application, the following describes an implementation of this application in detail by using some specific embodiments.

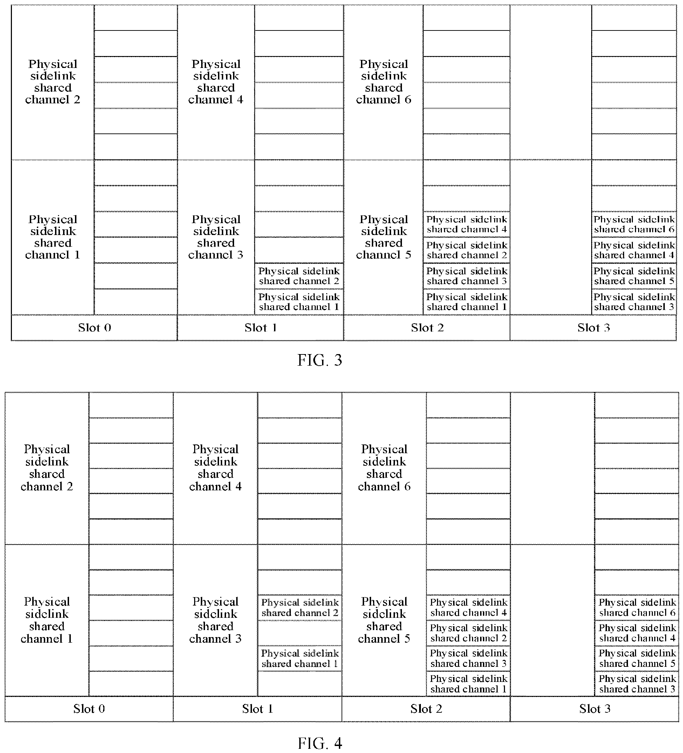

Embodiment 1: The PSFCH feedback resources are allocated as contiguous resources, the PSFCH period N = 1, and the scheduling period M and the maximum number of repetitions K are both set to 2. When the mapping order is time first, frequency second, and the mapping rule is that there will be a PSFCH feedback resource only when there is a PSCCH/PSSCH, locations of PSFCH feedback resources corresponding to the PSSCHs are shown in FIG. 3. It can be seen that there are locations for PSFCH feedback resources corresponding to physical sidelink shared channel 1 and physical sidelink shared channel 2 in both slot 1 and slot 2, but at different frequency domain locations.

In this embodiment, the maximum number of transmissions of a PSFCH feedback is increased to a plurality of times, which increases the possibility of successful transmission in an unlicensed band compared to traditional mapping rules. In addition, the dynamic mapping configuration in frequency domain maximizes the utilization of frequency domain resources.

Embodiment 2: The PSFCH feedback resources are allocated as contiguous resources, the PSFCH period N = 1, and the scheduling period M and the maximum number of repetitions K are both set to 2.

When the mapping order is time first, frequency second, and the mapping rule is a static mapping rule, the locations of the PSFCH feedback resources corresponding to the PSSCHs are shown in FIG. 4. It can be seen that the locations for PSFCH feedback resources corresponding to physical sidelink shared channel 1 and physical sidelink shared channel 2 in slot 1 and slot 2 are the same.

In this embodiment, the maximum number of transmissions of a PSFCH feedback is increased to a plurality of times, which increases the possibility of successful transmission in an unlicensed band compared to traditional mapping rules.

Embodiment 3: The PSFCH feedback resource are allocated as contiguous resources, the PSFCH period N = 1, the scheduling period M is configured as 3, and the maximum number of repetitions K is configured as 2, and is discontinuous.

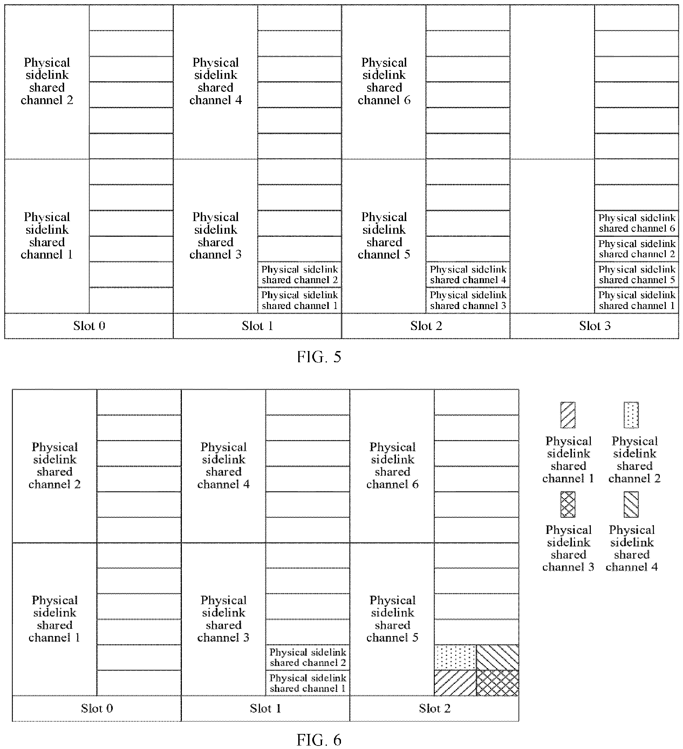

When the mapping order is time first, frequency second, the locations of the PSFCH feedback resources corresponding to the PSSCHs are shown in FIG. 5. It can be seen that the feedback locations corresponding to physical sidelink shared channel 1 and physical sidelink shared channel 2 are in slot 1 and slot 3, respectively.

It can be seen that the maximum number of transmissions of a PSFCH feedback is increased to two, which increases the possibility of successful transmission in an unlicensed band compared to traditional mapping rules.

In this embodiment, the maximum number of transmissions of a PSFCH feedback is increased to a plurality of times, which increases the possibility of successful transmission in an unlicensed band compared to traditional mapping rules. In addition, a certain gap can be configured between a plurality of transmissions depending on the transmission scenario, so as to meet some specific time requirements and ensure the possibility of a plurality of transmissions.

Embodiment 4: The PSFCH feedback resources are allocated as contiguous resources, the PSFCH period N = 1, and the scheduling period M and the maximum number of repetitions K are both set to 2.

When a mapping relationship between a PSSCH and a PSFCH in each PSFCH period in a scheduling period exists in an independent way, the mapping methods of PSSCHs in the same frequency domain location in different PSFCH periods are the same, but are distinguished in code domain through different cyclic shift values (as shown in FIG. 6).

It can be seen that the maximum number of transmissions of a PSFCH feedback is increased to a plurality of times, which increases the possibility of successful transmission in an unlicensed band compared to traditional mapping rules. In addition, PSFCHs corresponding to PSSCHs in the same frequency domain location at different times are mapped through code domain multiplexing, maximizing the utilization of frequency domain resources.

Embodiment 5: Mapping method 1 of PSFCH in distributed resource allocation.

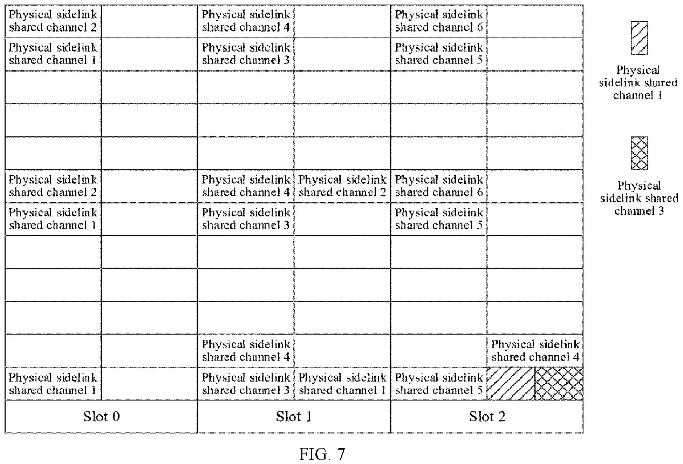

The PSFCH feedback resources are allocated as non-contiguous resources, the PSFCH period N = 1, and the scheduling period M and the maximum number of repetitions K are both set to 2. In this case, the PSSCH exists in the form of an interlace in frequency domain, as shown in FIG. 7. Mapping can be started from the lowest frequency domain location of the subchannel/interlace where the PSSCH is located. In addition, PSFCHs corresponding to subchannels/interlaces in the same frequency domain location but different time domain locations are distinguished through code domain multiplexing, for example, the PSFCH feedback mapping of physical sidelink shared channel 1 and physical sidelink shared channel 3 in slot 2 in FIG. 7.

It can be seen that a PSFCH is mapped in a frequency domain location corresponding to an interlace corresponding to a PSSCH, and frequency domain resources can be occupied by a plurality of different PSFCHs to meet the requirement of OCB in an unlicensed band.

Embodiment 6: Mapping method 2 of PSFCH in distributed resource allocation.

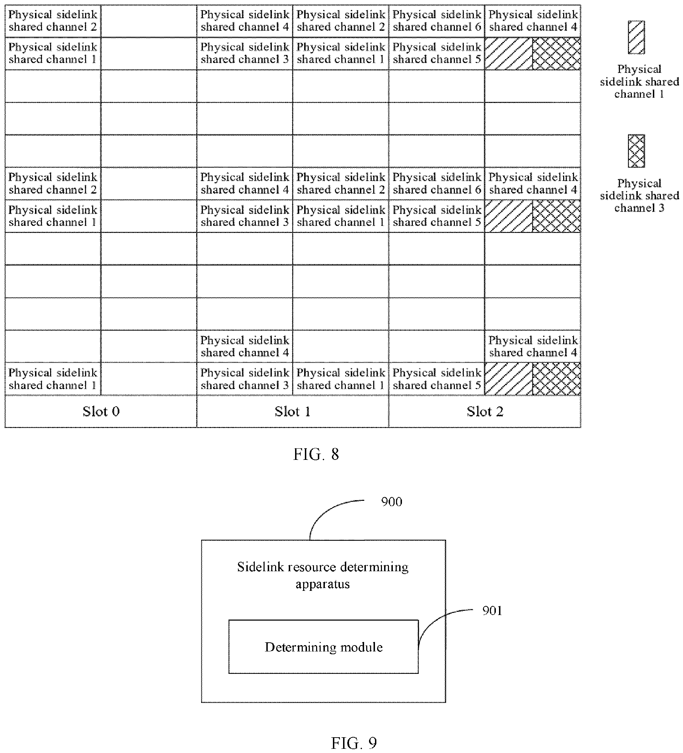

The PSFCH feedback resources are allocated as non-contiguous resources, the PSFCH period N = 1, and the scheduling period M and the maximum number of repetitions K are both set to 2. In this case, the PSSCH exists in the form of an interlace in frequency domain, as shown in FIG. 8. Mapping can be started from the lowest frequency domain location of the subchannel/interlace where the PSSCH is located. In addition, the frequency domain location corresponding to the interlace of each PSSCH has a corresponding PSFCH mapping, making it easier to meet the requirement of OCB. In addition, the PSFCHs corresponding to subchannels/interlaces in the same frequency domain location but different time domain locations are distinguished through code domain multiplexing.

It can be seen that the PSFCH is mapped in the frequency domain location corresponding to each interlace corresponding to the PSSCH, so that the requirement of the unlicensed band OCB can be met even when the system is less congested, preventing preemption by other devices.

It should be noted that the sidelink resource determining method according to this embodiment of this application may be executed by a sidelink resource determining apparatus or a control module for executing the sidelink resource determining method in the sidelink resource determining apparatus. In this embodiment of this application, the sidelink resource determining method being executed by the sidelink resource determining apparatus is used as an example to describe the sidelink resource determining apparatus according to the embodiments of this application.

Refer to FIG. 9. FIG. 9 is a structural diagram of a sidelink resource determining apparatus according to an embodiment of this application. As shown in FIG. 9, the sidelink resource determining apparatus 900 includes:

a determining module 901, configured to determine a PSFCH resource or a PSFCH candidate resource according to a physical sidelink feedback channel PSFCH mapping rule; where
the PSFCH mapping rule satisfies at least one of the following:

PSFCH mapping is performed in M PSFCH periods, where M is an integer greater than 1; and
a resource location of the PSFCH resource or PSFCH candidate resource is dynamically indicated.

Optionally, a value of M is associated with at least one of the following: maximum number of retransmissions, number of blind retransmissions, channel occupancy ratio, channel busy ratio, hybrid automatic repeat request HARQ feedback mechanism, cast type, number of receiving terminals, and number of terminals providing PSFCH feedback.

Optionally, during a first preset time period in the M PSFCH periods, a maximum number of transmissions of a first PSFCH in time domain is K, where K is a positive integer less than or equal to M.

Optionally, K transmission locations of the first PSFCH in the M PSFCH periods include:

PSFCH transmission locations in most recent P PSFCH periods satisfying a first preset condition, where P is a natural number less than or equal to K; and PSFCH transmission locations in K-P PSFCH periods satisfying a second preset condition; where the P PSFCH periods do not include any one of the K-P PSFCH periods.

Optionally, the first preset condition and the second preset condition each include at least one of the following:

a time gap between a PSFCH transmission location and a corresponding physical sidelink control channel PSCCH or physical sidelink shared channel PSSCH is greater than or equal to a data processing time;

the time gap between the PSFCH transmission location and the corresponding PSCCH or PSSCH is greater than or equal to a PSFCH transmission processing time;

the time gap between the PSFCH transmission location and the corresponding PSCCH or PSSCH is greater than or equal to T1;

the time gap between the PSFCH transmission location and the corresponding PSCCH or PSSCH is greater than or equal to T3; and

the time gap between the PSFCH transmission location and the corresponding PSCCH or PSSCH is greater than or equal to a remaining channel occupancy time, or the time gap between the PSFCH transmission location and the corresponding PSCCH or PSSCH is less than or equal to the remaining channel occupancy time.

Optionally, the second preset condition further includes at least one of the following:

a time gap between transmission locations of any two adjacent PSFCH periods is greater than or equal to a channel occupancy time; and duration of the PSFCH period is greater than a maximum channel occupancy time or the remaining channel occupancy time.

Optionally, the P PSFCH periods and the K-P PSFCH periods satisfy at least one of the following:

channel access priority class CAPC rules are different;

time conditions that need to be satisfied are different; and

transmit powers are different.

Optionally, the CAPC rules satisfy:

CAPC rules of the P PSFCH periods are determined based on at least one of channel busy ratio CBR, channel occupancy ratio CR, number of terminals providing PSFCH feedback, PSCCH corresponding to a PSFCH, and PSSCH corresponding to the PSFCH; and

CAPC rules of the K-P PSFCH periods are determined based on at least one of channel busy ratio CBR, channel occupancy ratio CR, and number of terminals providing PSFCH feedback.

Optionally, the first preset time period is at least one of the following: M PSFCH periods, remaining channel occupancy time, preset time window, and time period associated with a preset timer.

Optionally, a value of K and K first identifier values are agreed in a protocol, preconfigured by a network-side device, configured by a network-side device, indicated by a network-side device, or indicated by a terminal; where

the first identifier value is a value of an identifier of a PSFCH period corresponding to a transmission location of the first PSFCH.

Optionally, in a case that the first identifier values are indicated by a network-side device or a terminal, the first identifier values are indicated by radio resource control RRC, media access control MAC control element CE, downlink control information DCI, or sidelink control information SCI.

Optionally, the PSFCH resource or the PSFCH candidate resource occupies M1 physical resource blocks PRBs in total, where M1 is a positive integer, and M1 satisfies at least one of the following:

M1 is a parameter agreed in a protocol, preconfigured by a network-side device, configured by a network-side device, configured by a terminal, or preconfigured by a terminal; or M1 is indicated by indication information carried in RRC, MAC CE, DCI, or SCI; and

M1 is associated with at least one of PSFCH period, PSFCH scheduling period, maximum number of transmissions of one PSFCH in time domain, PSFCH feedback mechanism, number of PRBs of a PSSCH corresponding to a PSFCH, number of interlaces of the PSSCH corresponding to the PSFCH, and minimum number of resource blocks RBs required for occupied channel bandwidth, where the PSFCH scheduling period is the M PSFCH periods.

Optionally, for a PSSCH slot associated with a time domain location of PSFCH transmission and a first object, a transmission resource corresponding to the first object on the PSSCH slot is L PRBs among the M1 PRBs, where the first object is a subchannel or an interlace, L being a positive integer.

Optionally, the L PRBs are PRBs with an index range of [(slot_index+j*N)* L,(slot_index+1+j*N)*L-1] among the M1 PRBs, where slot_index represents an index value of the PSSCH slot, j represents an index value of the subchannel or interlace, and N represents the number of slots in a PSFCH period.

Optionally, the index value of the PSSCH slot satisfies any one of the following:

being determined based on a slot location in one PSFCH scheduling period associated with the PSFCH; and

being determined based on a slot location in K PSFCH periods associated with the PSFCH, where K represents a maximum number of transmissions of one PSFCH in time domain.

Optionally, in some embodiments, the L PRBs are PRBs among the M1 PRBs, with an index range of [(slot_index+j*N)* L,(slot_index+1+j*N)*L-1] in each PSFCH period, where slot_index represents an index value of the PSSCH slot, j represents an index value of the subchannel or the interlace, and N represents the number of slots in a PSFCH period.

Optionally, the index value of the PSSCH slot is determined based on a slot location in a PSFCH period associated with the PSFCH.

Optionally, the index value of the subchannel or the interlace satisfies any one of the following:

the index value of the subchannel or the interlace in a slot; and

a frequency-domain order of subchannels with data or interlaces in a slot.

Optionally, the value of L satisfies:

$$L = \frac{M1}{(N_f * N)},$$

where $N_f$ represents the total number of first objects in one slot in frequency domain, the first object being a subchannel or an interlace.

Optionally, in a case of performing PSFCH mapping in M physical sidelink feedback channel PSFCH periods, the PSFCH mapping rule further satisfies at least one of the following:

time-frequency domain resources of the PSFCH are contiguous or non-contiguous;

mapping is performed in ascending or descending order of slot index values of PSSCH slots and in ascending or descending order of index values of first objects; and

time-frequency domain mapping is performed on basis of PSFCH period.

Optionally, one PSFCH transmission occupies R transmission resources, and R satisfies: $R = N_{type} * L * N_{cs}$, where $N_{type}$ represents a target value corresponding to a feedback mechanism, and $N_{cs}$ represents the number of cyclic shift pairs.

Optionally, $N_{cs}$ is associated with the PSFCH scheduling period or the maximum number of transmissions K of one PSFCH in time domain.

Optionally, a PSFCH sequence on the R transmission resources is a repetition of a sequence or a sequence with different cyclic values shifted.

Optionally, the number of frequency domain radio bearers RBs or interlaces resulting from interlacing corresponding to one PSFCH transmission, $M_{UE}$, satisfies any one of the following:

$M_{UE}$ is equal to a minimum number of RBs $M_{OCB}$ required for occupied channel bandwidth;

$$M_{UE} = \frac{M_{OCB}}{N};$$

and

$$M_{UE} = \frac{M_{OCB}}{K * N};$$

where

K represents the maximum number of transmissions of one PSFCH in time domain, and N represents the number of slots in a PSFCH period.

Optionally, in a case that PSFCH mapping is performed in M physical sidelink feedback channel PSFCH periods and that a frequency domain location of a PFSCH is associated with a second object, the mapping rule further satisfies:

mapping starts from a frequency domain location corresponding to a lowest or highest interlace of the second object; where

the second object is a PSSCH or a PSCCH.

Optionally, the resource location includes a time domain location and a frequency domain location.

Optionally, the time domain location is indicated by first indication information, and the first indication information is used to indicate any one of the following:

a slot index value of a feedback PSFCH resource corresponding to the second object;

a slot offset value of the feedback PSFCH resource corresponding to the second object; and

a PSFCH period offset value of the feedback PSFCH resource corresponding to the second object; where the first indication information is carried in SCI or DCI, and the second object is a PSSCH or a PSCCH.

Optionally, the frequency domain location is indicated by the second indication information; where the second indication information is used to indicate any one of the following: the frequency domain index value of the feedback PSFCH resource corresponding to the second object; and the frequency domain offset value of the feedback PSFCH resource corresponding to the second object; where

the second indication information is carried in sidelink control information or downlink control information, and the second object is a PSSCH or a PSCCH.

Optionally, the PSFCH mapping rule is agreed in a protocol, preconfigured by a network-side device, configured by a network-side device, preconfigured by a terminal, or configured by a terminal.

The sidelink resource determining apparatus provided in this embodiment of this application can implement the processes in the method embodiment in FIG. 2. To avoid repetition, details are not described herein again.

The sidelink resource determining apparatus in this embodiment of this application may be an apparatus, an apparatus or electronic device having an operating system, or a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine or the like, which is not specifically limited in the embodiments of this application.

The sidelink resource determining apparatus provided in this embodiment of this application can implement the processes implemented by the method embodiment in FIG. 2, with the same technical effects achieved. To avoid repetition, details are not described herein again.

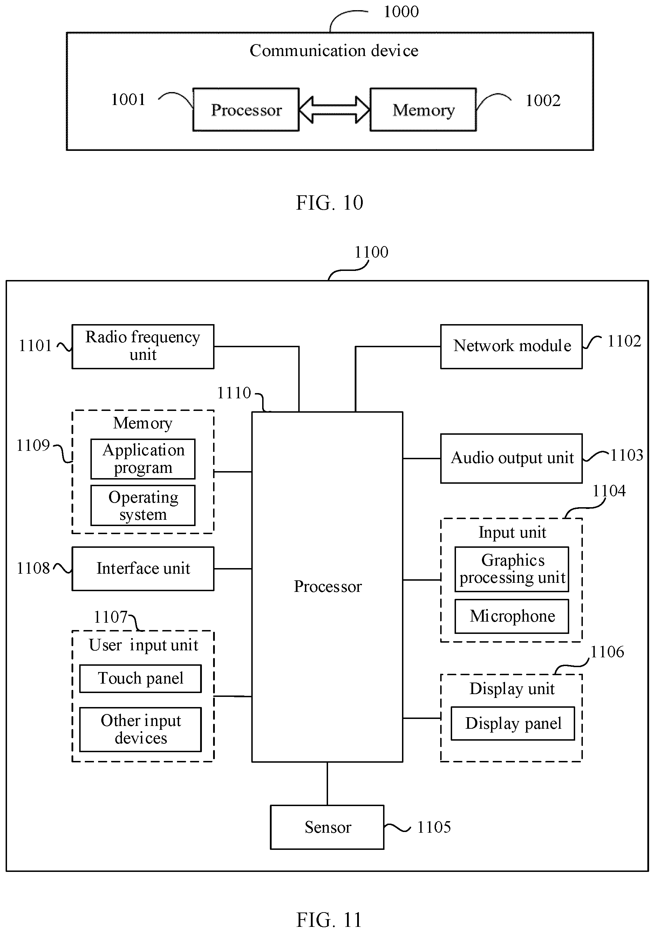

As shown in FIG. 10, an embodiment of this application further provides a communication device 1000, including a processor 1001, a memory 1002, and a program or instructions stored in the memory 1002 and capable of running on the processor 1001, where when the program or instructions are executed by the processor 1001, the processes of the foregoing sidelink resource determining method embodiment are implemented, with the same technical effects achieved. To avoid repetition, details are not described herein again.

An embodiment of this application further provides a terminal, including a processor and a communication interface, where the processor is configured to determine a PSFCH resource or a PSFCH candidate resource according to a physical sidelink feedback channel PSFCH mapping rule; where the PSFCH mapping rule satisfies at least one of the following: PSFCH mapping is performed in M PSFCH periods, where M is an integer greater than 1; and a resource location of the PSFCH resource or PSFCH candidate resource is dynamically indicated. This terminal embodiment corresponds to the foregoing method embodiment on the terminal side. All processes and implementations in the foregoing method embodiment can be applicable to this terminal embodiment, with the same technical effects achieved. Specifically, FIG. 11 is a schematic diagram of a hardware structure of a terminal for implementing the embodiments of this application.

The terminal 1100 includes, but is not limited to, at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

It can be understood by those skilled in the art that the terminal 1100 may further include a power supply (for example, a battery) supplying power to the components. The power supply may be logically connected to the processor 1110 via a power management system, so that functions such as charge management, discharge management, and power consumption management are implemented by using the power management system. The structure of the terminal shown in FIG. 11 does not constitute any limitation on the terminal, and the terminal may include more or fewer components than shown in the figure, or combine some of the components, or have different arrangements of the components. Details are not described herein.

It should be understood that in this embodiment of this application, the input unit 1104 may include a graphics processing unit (Graphics Processing Unit, GPU) and a microphone. The graphics processing unit processes image data of a static picture or a video that is obtained by an image capture apparatus (for example, a camera) in a video capture mode or an image capture mode. The display unit may include a display panel 1106. The display panel may be configured in a form of a liquid crystal display, an organic light-emitting diode display, or the like. The user input unit 1107 includes a touch panel and other input devices. The touch panel is also referred to as a touchscreen. The touch panel may include two parts: a touch detection apparatus and a touch controller. The other input devices may include but are not limited to a physical keyboard, a functional button (such as a volume control button or a power on/off button), a trackball, a mouse, and a joystick. Details are not described herein.

In this embodiment of this application, the radio frequency unit 1101 transmits downlink data received from a network-side device to the processor 1110 for processing, and in addition, transmits uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 109 may include a program or instruction storage area and a data storage area. The program or instruction storage area may store an operating system, an application program or instructions required by at least one function (for example, sound play function or image play function), and the like. In addition, the memory 1109 may include a high-speed random access memory, and may further include a non-transient memory, where the non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-transient solid-state storage devices.

The processor 1110 may include one or more processing units. Optionally, an application processor and a modem processor may be integrated in the processor 1110. The application processor primarily processes an operating system, user interfaces, application programs or instructions, and the like. The modem processor primarily processes radio communication, for example, being a baseband processor. It can be understood that the modem processor may alternatively be not integrated in the processor 1110.

The processor 1110 is configured to determine a PSFCH resource or a PSFCH candidate resource according to a physical sidelink feedback channel PSFCH mapping rule; where the PSFCH mapping rule satisfies at least one of the following:

PSFCH mapping is performed in M PSFCH periods, where M is an integer greater than 1; and
a resource location of the PSFCH resource or PSFCH candidate resource is dynamically indicated.

In the embodiments of this application, a PSFCH resource or a PSFCH candidate resource is determined according to a physical sidelink feedback channel PSFCH mapping rule; where the PSFCH mapping rule satisfies at least one of the following: PSFCH mapping is performed in M PSFCH periods, where M is an integer greater than 1; and a resource location of the PSFCH resource or PSFCH candidate resource is dynamically indicated. In this way, PFSCH transmission can be implemented in an unlicensed band. In addition, the reliability of PSFCH transmission can be guaranteed.

Optionally, a value of M is associated with at least one of the following: maximum number of retransmissions, number of blind retransmissions, channel occupancy ratio, channel busy ratio, hybrid automatic repeat request HARQ feedback mechanism, cast type, number of receiving terminals, and number of terminals providing PSFCH feedback.

Optionally, during a first preset time period in the M PSFCH periods, a maximum number of transmissions of a first PSFCH in time domain is K, where K is a positive integer less than or equal to M.

Optionally, K transmission locations of the first PSFCH in the M PSFCH periods include:

PSFCH transmission locations in most recent P PSFCH periods satisfying a first preset condition, where P is a natural number less than or equal to K; and
PSFCH transmission locations in K-P PSFCH periods satisfying a second preset condition; where the P PSFCH periods do not include any one of the K-P PSFCH periods.

Optionally, the first preset condition and the second preset condition each include at least one of the following:

a time gap between a PSFCH transmission location and a corresponding physical sidelink control channel PSCCH or physical sidelink shared channel PSSCH is greater than or equal to a data processing time;
the time gap between the PSFCH transmission location and the corresponding PSCCH or PSSCH is greater than or equal to a PSFCH transmission processing time;
the time gap between the PSFCH transmission location and the corresponding PSCCH or PSSCH is greater than or equal to T1;
the time gap between the PSFCH transmission location and the corresponding PSCCH or PSSCH is greater than or equal to T3; and
the time gap between the PSFCH transmission location and the corresponding PSCCH or PSSCH is greater than or equal to a remaining channel occupancy time, or the time gap between the PSFCH transmission location and the corresponding PSCCH or PSSCH is less than or equal to the remaining channel occupancy time.

Optionally, the second preset condition further includes at least one of the following:

a time gap between transmission locations of any two adjacent PSFCH periods is greater than or equal to a channel occupancy time; and
duration of the PSFCH period is greater than a maximum channel occupancy time or the remaining channel occupancy time.

Optionally, the P PSFCH periods and the K-P PSFCH periods satisfy at least one of the following:

channel access priority class CAPC rules are different;

time conditions that need to be satisfied are different; and

transmit powers are different.

Optionally, the CAPC rules satisfy:

CAPC rules of the P PSFCH periods are determined based on at least one of channel busy ratio CBR, channel occupancy ratio CR, number of terminals providing PSFCH feedback, PSCCH corresponding to a PSFCH, and PSSCH corresponding to the PSFCH; and

CAPC rules of the K-P PSFCH periods are determined based on at least one of channel busy ratio CBR, channel occupancy ratio CR, and number of terminals providing PSFCH feedback.

Optionally, the first preset time period is at least one of the following: M PSFCH periods, remaining channel occupancy time, preset time window, and time period associated with a preset timer.

Optionally, a value of K and K first identifier values are agreed in a protocol, preconfigured by a network-side device, configured by a network-side device, indicated by a network-side device, or indicated by a terminal; where

the first identifier value is a value of an identifier of a PSFCH period corresponding to a transmission location of the first PSFCH.

Optionally, in a case that the first identifier values are indicated by a network-side device or a terminal, the first identifier values are indicated by radio resource control RRC, media access control MAC control element CE, downlink control information DCI, or sidelink control information SCI.

Optionally, the PSFCH resource or the PSFCH candidate resource occupies M1 physical resource blocks PRBs in total, where M1 is a positive integer, and M1 satisfies at least one of the following:

M1 is a parameter agreed in a protocol, preconfigured by a network-side device, configured by a network-side device, configured by a terminal, or preconfigured by a terminal; or M1 is indicated by indication information carried in RRC, MAC CE, DCI, or SCI; and

M1 is associated with at least one of PSFCH period, PSFCH scheduling period, maximum number of transmissions of one PSFCH in time domain, PSFCH feedback mechanism, number of PRBs of a PSSCH corresponding to a PSFCH, number of interlaces of the PSSCH corresponding to the PSFCH, and minimum number of resource blocks RBs required for occupied channel bandwidth, where the PSFCH scheduling period is the M PSFCH periods.

Optionally, for a PSSCH slot associated with a time domain location of PSFCH transmission and a first object, a transmission resource corresponding to the first object on the PSSCH slot is L PRBs among the M1 PRBs, where the first object is a subchannel or an interlace, L being a positive integer.

Optionally, the L PRBs are PRBs with an index range of [(slot_index+j*N)* L,(slot_index+1+j*N)*L-1] among the M1 PRBs, where slot_index represents an index value of the PSSCH slot, j represents an index value of the subchannel or interlace, and N represents the number of slots in a PSFCH period.

Optionally, the index value of the PSSCH slot satisfies any one of the following:

being determined based on a slot location in one PSFCH scheduling period associated with the PSFCH; and

being determined based on a slot location in K PSFCH periods associated with the PSFCH, where K represents a maximum number of transmissions of one PSFCH in time domain.

Optionally, in some embodiments, the L PRBs are PRBs among the M1 PRBs, with an index range of [(slot_index+j*N)* L,(slot_index+1+j*N)*L-1] in each PSFCH period, where slot_index represents an index value of the PSSCH slot, j represents an index value of the subchannel or the interlace, and N represents the number of slots in a PSFCH period.

Optionally, the index value of the PSSCH slot is determined based on a slot location in a PSFCH period associated with the PSFCH.

Optionally, the index value of the subchannel or the interlace satisfies any one of the following:

the index value of the subchannel or the interlace in a slot; and

a frequency-domain order of subchannels with data or interlaces in a slot.

Optionally, the value of L satisfies:

$$L = \frac{M1}{(N_f * N)},$$

where $N_f$ represents the total number of first objects in one slot in frequency domain, the first object being a subchannel or an interlace.

Optionally, in a case of performing PSFCH mapping in M physical sidelink feedback channel PSFCH periods, the PSFCH mapping rule further satisfies at least one of the following:

time-frequency domain resources of the PSFCH are contiguous or non-contiguous;

mapping is performed in ascending or descending order of slot index values of PSSCH slots and in ascending or descending order of index values of first objects; and

time-frequency domain mapping is performed on basis of PSFCH period.

Optionally, one PSFCH transmission occupies R transmission resources, and R satisfies: $R=N_{type}*L*N_{cs}$, where $N_{type}$ represents a target value corresponding to a feedback mechanism, and $N_{cs}$ represents the number of cyclic shift pairs.

Optionally, $N_{cs}$ is associated with the PSFCH scheduling period or the maximum number of transmissions K of one PSFCH in time domain.

Optionally, a PSFCH sequence on the R transmission resources is a repetition of a sequence or a sequence with different cyclic values shifted.

Optionally, the number of frequency domain radio bearers RBs or interlaces resulting from interlacing corresponding to one PSFCH transmission, $M_{UE}$, satisfies any one of the following:

$M_{UE}$ is equal to a minimum number of RBs $M_{OCB}$ required for occupied channel bandwidth;

$$M_{UE} = \frac{M_{OCB}}{N};$$

and

$$M_{UE} = \frac{M_{OCB}}{K*N};$$

where

K represents the maximum number of transmissions of one PSFCH in time domain, and N represents the number of slots in a PSFCH period.

Optionally, in a case that PSFCH mapping is performed in M physical sidelink feedback channel PSFCH periods and that a frequency domain location of a PFSCH is associated with a second object, the mapping rule further satisfies:

mapping starts from a frequency domain location corresponding to a lowest or highest interlace of the second object; where
the second object is a PSSCH or a PSCCH.

Optionally, the resource location includes a time domain location and a frequency domain location.

Optionally, the time domain location is indicated by first indication information, and the first indication information is used to indicate any one of the following:

a slot index value of a feedback PSFCH resource corresponding to the second object;
a slot offset value of the feedback PSFCH resource corresponding to the second object; and
a PSFCH period offset value of the feedback PSFCH resource corresponding to the second object; where the first indication information is carried in SCI or DCI, and the second object is a PSSCH or a PSCCH.

Optionally, the frequency domain location is indicated by the second indication information; where the second indication information is used to indicate any one of the following: the frequency domain index value of the feedback PSFCH resource corresponding to the second object; and the frequency domain offset value of the feedback PSFCH resource corresponding to the second object; where the second indication information is carried in sidelink control information or downlink control information, and the second object is a PSSCH or a PSCCH.

Optionally, the PSFCH mapping rule is agreed in a protocol, preconfigured by a network-side device, configured by a network-side device, preconfigured by a terminal, or configured by a terminal.

An embodiment of this application further provides a readable storage medium, where the readable storage medium may be non-volatile or volatile. The readable storage medium stores a program or instructions, and when the program or instructions are executed by a processor, the processes of the foregoing sidelink resource determining method embodiments are implemented, with the same technical effects achieved. To avoid repetition, details are not described herein again.

The processor is the processor in the electronic device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing sidelink resource determining method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product is stored in a non-transitory storage medium. When the computer program product is executed by at least one processor, the processes of the foregoing sidelink resource determining method embodiments are implemented, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a base station, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A sidelink resource determining method, comprising:

   determining, by a receiving terminal, a PSFCH resource or a PSFCH candidate resource according to a physical sidelink feedback channel PSFCH mapping rule; wherein the PSFCH mapping rule satisfies at least one of the following:

   PSFCH mapping is performed in M PSFCH periods, wherein M is an integer greater than 1; and
   a resource location of the PSFCH resource or PSFCH candidate resource is dynamically indicated.

2. The method according to claim 1, wherein a value of M is associated with at least one of the following: maximum number of retransmissions, number of blind retransmissions, channel occupancy ratio, channel busy ratio, hybrid automatic repeat request HARQ feedback mechanism, cast type, number of receiving terminals, and number of terminals providing PSFCH feedback.

3. The method according to claim 1, wherein during a first preset time period in the M PSFCH periods, a maximum number of transmissions of a first PSFCH in time domain is K, wherein K is a positive integer less than or equal to M.

4. The method according to claim 3, wherein K transmission locations of the first PSFCH in the M PSFCH periods comprise:

   PSFCH transmission locations in most recent P PSFCH periods satisfying a first preset condition, wherein P is a natural number less than or equal to K; and
   PSFCH transmission locations in K-P PSFCH periods satisfying a second preset condition; wherein
   the P PSFCH periods do not comprise any one of the K-P PSFCH periods.

5. The method according to claim 4, wherein the first preset condition and the second preset condition each comprise at least one of the following:

   a time gap between a PSFCH transmission location and a corresponding physical sidelink control channel PSCCH or physical sidelink shared channel PSSCH is greater than or equal to a data processing time;
   the time gap between the PSFCH transmission location and the corresponding PSCCH or PSSCH is greater than or equal to a PSFCH transmission processing time;
   the time gap between the PSFCH transmission location and the corresponding PSCCH or PSSCH is greater than or equal to T1;
   the time gap between the PSFCH transmission location and the corresponding PSCCH or PSSCH is greater than or equal to T3; and

the time gap between the PSFCH transmission location and the corresponding PSCCH or PSSCH is greater than or equal to a remaining channel occupancy time, or the time gap between the PSFCH transmission location and the corresponding PSCCH or PSSCH is less than or equal to the remaining channel occupancy time.

6. The method according to claim 5, wherein the second preset condition further comprises at least one of the following:

a time gap between transmission locations of any two adjacent PSFCH periods is greater than or equal to a channel occupancy time; and duration of the PSFCH period is greater than a maximum channel occupancy time or the remaining channel occupancy time.

7. The method according to claim 4, wherein the P PSFCH periods and the K-P PSFCH periods satisfy at least one of the following:

channel access priority class CAPC rules are different;
time conditions that need to be satisfied are different; and
transmit powers are different.

8. The method according to claim 7, wherein the CAPC rules satisfy:

CAPC rules of the P PSFCH periods are determined based on at least one of channel busy ratio CBR, channel occupancy ratio CR, number of terminals providing PSFCH feedback, PSCCH corresponding to a PSFCH, and PSSCH corresponding to the PSFCH; and
CAPC rules of the K-P PSFCH periods are determined based on at least one of channel busy ratio CBR, channel occupancy ratio CR, and number of terminals providing PSFCH feedback.

9. The method according to claim 3, wherein the first preset time period is at least one of the following: M PSFCH periods, remaining channel occupancy time, preset time window, and time period associated with a preset timer.

10. The method according to claim 3, wherein a value of K and K first identifier values are agreed in a protocol, preconfigured by a network-side device, configured by a network-side device, indicated by a network-side device, or indicated by a terminal; wherein

the first identifier value is a value of an identifier of a PSFCH period corresponding to a transmission location of the first PSFCH.

11. The method according to claim 10, wherein in a case that the first identifier values are indicated by a network-side device or a terminal, the first identifier values are indicated by radio resource control RRC, media access control MAC control element CE, downlink control information DCI, or sidelink control information SCI.

12. The method according to claim 1, wherein the PSFCH resource or the PSFCH candidate resource totally occupies M1 physical resource blocks PRBs, wherein M1 is a positive integer, and M1 satisfies at least one of the following:

M1 is a parameter agreed in a protocol, preconfigured by a network-side device, configured by a network-side device, configured by a terminal, or preconfigured by a terminal; or M1 is indicated by indication information carried in RRC, MAC CE, DCI, or SCI; and
M1 is associated with at least one of PSFCH period, PSFCH scheduling period, maximum number of transmissions of one PSFCH in time domain, PSFCH feedback mechanism, number of PRBs of a PSSCH corresponding to a PSFCH, number of interlaces of the PSSCH corresponding to the PSFCH, and minimum number of resource blocks RBs required for occupied channel bandwidth, wherein the PSFCH scheduling period is the M PSFCH periods.

13. The method according to claim 12, wherein for a PSSCH slot associated with a time domain location of PSFCH transmission and a first object, a transmission resource corresponding to the first object on the PSSCH slot is L PRBs among the M1 PRBs, wherein the first object is a subchannel or an interlace, L being a positive integer.

14. The method according to claim 13, wherein the L PRBs are PRBs with an index range of $[(slot\_index+j*N)*L,(slot\_index+1+j*N)*L-1]$ among the M1 PRBs, wherein slot_index represents an index value of the PSSCH slot, j represents an index value of the subchannel or interlace, and N represents the number of slots in a PSFCH period.

15. The method according to claim 14, wherein the index value of the PSSCH slot satisfies any one of the following:

being determined based on a slot location in one PSFCH scheduling period associated with the PSFCH; and

being determined based on a slot location in K PSFCH periods associated with the PSFCH, wherein K represents a maximum number of transmissions of one PSFCH in time domain.

16. The method according to claim 13, wherein the L PRBs are PRBs among the M1 PRBs, with an index range of [(slot_index+j*N)* L,(slot_index+1+j*N)*L-1] in each PSFCH period, wherein slot_index represents an index value of the PSSCH slot, j represents an index value of the subchannel or the interlace, and N represents the number of slots in a PSFCH period.

17. The method according to claim 16, wherein the index value of the PSSCH slot is determined based on a slot location in one PSFCH period associated with the PSFCH.

18. The method according to any one of claims 13 to 17, wherein the index value of the subchannel or the interlace satisfies any one of the following:

   the index value of the subchannel or the interlace in a slot; and
   a frequency-domain order of subchannels with data or interlaces in a slot.

19. The method according to any one of claims 13 to 17, wherein a value of L satisfies:

$$L = \frac{M1}{(N_f * N)},$$

   wherein $N_f$ represents the total number of first objects in one slot in frequency domain, the first object being a subchannel or an interlace.

20. The method according to any one of claims 13 to 17, wherein in a case of performing PSFCH mapping in M PSFCH periods, the PSFCH mapping rule further satisfies at least one of the following:

   time-frequency domain resources of the PSFCH are contiguous or non-contiguous;
   mapping is performed in ascending or descending order of slot index values of PSSCH slots and in ascending or descending order of index values of first objects; and
   time-frequency domain mapping is performed on basis of PSFCH period.

21. The method according to any one of claims 13 to 17, wherein one PSFCH transmission occupies R transmission resources, wherein R satisfies: R=$N_{type}$*L*$N_{cs}$, $N_{type}$ represents a target value corresponding to a feedback mechanism, and $N_{cs}$ represents the number of cyclic shift pairs.

22. The method according to claim 21, wherein $N_{cs}$ is associated with the PSFCH scheduling period or the maximum number of transmissions K of one PSFCH in time domain.

23. The method according to claim 22, wherein a PSFCH sequence on the R transmission resources is a repetition of a sequence or a sequence with different cyclic values shifted.

24. The method according to claim 1, wherein the number of frequency domain radio bearers RBs or interlaces resulting from interlacing corresponding to one PSFCH transmission, $M_{UE}$, satisfies any one of the following:

   $M_{UE}$ is equal to a minimum number of RBs $M_{OCB}$ required for occupied channel bandwidth;

$$M_{UE} = \frac{M_{OCB}}{N};$$

   and

$$M_{UE} = \frac{M_{OCB}}{K * N},$$

   wherein
   K represents the maximum number of transmissions of one PSFCH in time domain, and N represents the number of slots in a PSFCH period.

25. The method according to claim 1, wherein in a case that PSFCH mapping is performed in M PSFCH periods and that a frequency domain location of a PFSCH is associated with a second object, the mapping rule further satisfies:

   mapping starts from a frequency domain location corresponding to a lowest or highest interlace of the second object; wherein
   the second object is a PSSCH or a PSCCH.

26. The method according to claim 1, wherein the resource location comprises a time domain location and a frequency domain location.

27. The method according to claim 26, wherein the time domain location is indicated by first indication information, and the first indication information is used to indicate any one of the following:

   a slot index value of a feedback PSFCH resource corresponding to the second object;

a slot offset value of the feedback PSFCH resource corresponding to the second object; and a PSFCH period offset value of the feedback PSFCH resource corresponding to the second object; wherein

the first indication information is carried in SCI or DCI, and the second object is a PSSCH or a PSCCH.

28. The method according to claim 26, wherein the frequency domain location is indicated by second indication information, and the second indication information is used to indicate any one of the following: a frequency domain index value of a feedback PSFCH resource corresponding to the second object; and a frequency domain offset value of the feedback PSFCH resource corresponding to the second object; wherein

the second indication information is carried in sidelink control information or downlink control information, and the second object is a PSSCH or a PSCCH.

29. The method according to claim 1, wherein the PSFCH mapping rule is agreed in a protocol, preconfigured by a network-side device, configured by a network-side device, preconfigured by a terminal, or configured by a terminal.

30. A sidelink resource determining apparatus, comprising:

a determining module, configured to determine a PSFCH resource or a PSFCH candidate resource according to a physical sidelink feedback channel PSFCH mapping rule; wherein the PSFCH mapping rule satisfies at least one of the following:

PSFCH mapping is performed in M PSFCH periods, wherein M is an integer greater than 1; and a resource location of the PSFCH resource or PSFCH candidate resource is dynamically indicated.

31. The apparatus according to claim 30, wherein a value of M is associated with at least one of the following: maximum number of retransmissions, number of blind retransmissions, channel occupancy ratio, channel busy ratio, hybrid automatic repeat request HARQ feedback mechanism, cast type, number of receiving terminals, and number of terminals providing PSFCH feedback.

32. The apparatus according to claim 31, wherein during a first preset time period in the M PSFCH periods, a maximum number of transmissions of a first PSFCH in time domain is K, wherein K is a positive integer less than or equal to M.

33. The apparatus according to claim 32, wherein K transmission locations of the first PSFCH in the M PSFCH periods comprise:

PSFCH transmission locations in most recent P PSFCH periods satisfying a first preset condition, wherein P is a natural number less than or equal to K; and PSFCH transmission locations in K-P PSFCH periods satisfying a second preset condition; wherein the P PSFCH periods do not comprise any one of the K-P PSFCH periods.

34. The apparatus according to claim 32, wherein the first preset time period is at least one of the following: M PSFCH periods, remaining channel occupancy time, preset time window, and time period associated with a preset timer.

35. The apparatus according to claim 30, wherein the PSFCH resource or the PSFCH candidate resource totally occupies M1 physical resource blocks PRBs, wherein M1 is a positive integer, and M1 satisfies at least one of the following:

M1 is a parameter agreed in a protocol, preconfigured by a network-side device, configured by a network-side device, configured by a terminal, or preconfigured by a terminal; or M1 is indicated by indication information carried in RRC, MAC CE, DCI, or SCI; and M1 is associated with at least one of PSFCH period, PSFCH scheduling period, maximum number of transmissions of one PSFCH in time domain, PSFCH feedback mechanism, number of PRBs of a PSSCH corresponding to a PSFCH, number of interlaces of the PSSCH corresponding to the PSFCH, and minimum number of resource blocks RBs required for occupied channel bandwidth, wherein the PSFCH scheduling period is the M PSFCH periods.

36. A terminal, comprising a memory, a processor, and a program stored in the memory and capable of running on the processor, wherein when the program is executed by the processor, the steps of the sidelink resource determining method according to any one of claims 1 to 29 are implemented.

37. A readable storage medium, wherein the readable storage medium stores a program or instructions, and when the program or instructions are executed by a processor, the steps of the sidelink resource determining method according to any one of claims 1 to 29 are implemented.

**38.** A chip, comprising a processor and a communication interface, wherein the communication interface is coupled to the processor, and the processor is configured to run a program or instructions so as to implement the steps of the sidelink resource determining method according to any one of claims 1 to 29.

**39.** A computer program product, wherein the computer program product is stored in a non-transient readable storage medium, and the computer program product is executed by at least one processor so as to implement the steps of the sidelink resource determining method according to any one of claims 1 to 29.

**40.** A communication device, configured to perform the steps of the sidelink resource determining method according to any one of claims 1 to 29.

FIG. 1

A receiving terminal determines a PSFCH resource or a
PSFCH candidate resource according to a physical sidelink
feedback channel PSFCH mapping rule

201

FIG. 2

| | | | | | | |
|---|---|---|---|---|---|---|
| Physical sidelink shared channel 2 | | Physical sidelink shared channel 4 | | Physical sidelink shared channel 6 | | |
| Physical sidelink shared channel 1 | | Physical sidelink shared channel 3 | | Physical sidelink shared channel 5 | Physical sidelink shared channel 4 | | Physical sidelink shared channel 6 |
| | | | | | Physical sidelink shared channel 2 | | Physical sidelink shared channel 4 |
| | | | Physical sidelink shared channel 2 | | Physical sidelink shared channel 3 | | Physical sidelink shared channel 5 |
| | | | Physical sidelink shared channel 1 | | Physical sidelink shared channel 1 | | Physical sidelink shared channel 3 |
| Slot 0 | | Slot 1 | | Slot 2 | | Slot 3 |

FIG. 3

| | | | | | | |
|---|---|---|---|---|---|---|
| Physical sidelink shared channel 2 | | Physical sidelink shared channel 4 | | Physical sidelink shared channel 6 | | |
| Physical sidelink shared channel 1 | | Physical sidelink shared channel 3 | Physical sidelink shared channel 2 | Physical sidelink shared channel 5 | Physical sidelink shared channel 4 | | Physical sidelink shared channel 6 |
| | | | | | Physical sidelink shared channel 2 | | Physical sidelink shared channel 4 |
| | | | Physical sidelink shared channel 1 | | Physical sidelink shared channel 3 | | Physical sidelink shared channel 5 |
| | | | | | Physical sidelink shared channel 1 | | Physical sidelink shared channel 3 |
| Slot 0 | | Slot 1 | | Slot 2 | | Slot 3 |

FIG. 4

|  |  |  |  |
|---|---|---|---|
| Physical sidelink shared channel 2 | Physical sidelink shared channel 4 | Physical sidelink shared channel 6 |  |
| Physical sidelink shared channel 1 | Physical sidelink shared channel 3 | Physical sidelink shared channel 5 | Physical sidelink shared channel 6 |
|  |  |  | Physical sidelink shared channel 2 |
|  | Physical sidelink shared channel 2 | Physical sidelink shared channel 4 | Physical sidelink shared channel 5 |
|  | Physical sidelink shared channel 1 | Physical sidelink shared channel 3 | Physical sidelink shared channel 1 |
| Slot 0 | Slot 1 | Slot 2 | Slot 3 |

FIG. 5

|  |  |  |
|---|---|---|
| Physical sidelink shared channel 2 | Physical sidelink shared channel 4 | Physical sidelink shared channel 6 |
| Physical sidelink shared channel 1 | Physical sidelink shared channel 3 | Physical sidelink shared channel 5 |
|  | Physical sidelink shared channel 2 |  |
|  | Physical sidelink shared channel 1 |  |
| Slot 0 | Slot 1 | Slot 2 |

Physical sidelink shared channel 1
Physical sidelink shared channel 2
Physical sidelink shared channel 3
Physical sidelink shared channel 4

FIG. 6

| | | | | | |
|---|---|---|---|---|---|
| Physical sidelink shared channel 2 | | Physical sidelink shared channel 4 | | Physical sidelink shared channel 6 | |
| Physical sidelink shared channel 1 | | Physical sidelink shared channel 3 | | Physical sidelink shared channel 5 | |
| | | | | | |
| | | | | | |
| | | | | | |
| Physical sidelink shared channel 2 | | Physical sidelink shared channel 4 | Physical sidelink shared channel 2 | Physical sidelink shared channel 6 | |
| Physical sidelink shared channel 1 | | Physical sidelink shared channel 3 | | Physical sidelink shared channel 5 | |
| | | | | | |
| | | | | | |
| | | | | | |
| | | Physical sidelink shared channel 4 | | | Physical sidelink shared channel 4 |
| Physical sidelink shared channel 1 | | Physical sidelink shared channel 3 | Physical sidelink shared channel 1 | Physical sidelink shared channel 5 | |
| Slot 0 | | Slot 1 | | Slot 2 | |

Physical sidelink shared channel 1

Physical sidelink shared channel 3

FIG. 7

25

| Physical sidelink shared channel 2 | | Physical sidelink shared channel 4 | Physical sidelink shared channel 2 | Physical sidelink shared channel 6 | Physical sidelink shared channel 4 |
| --- | --- | --- | --- | --- | --- |
| Physical sidelink shared channel 1 | | Physical sidelink shared channel 3 | Physical sidelink shared channel 1 | Physical sidelink shared channel 5 | |
| | | | | | |
| | | | | | |
| | | | | | |
| Physical sidelink shared channel 2 | | Physical sidelink shared channel 4 | Physical sidelink shared channel 2 | Physical sidelink shared channel 6 | Physical sidelink shared channel 4 |
| Physical sidelink shared channel 1 | | Physical sidelink shared channel 3 | Physical sidelink shared channel 1 | Physical sidelink shared channel 5 | |
| | | | | | |
| | | | | | |
| | | | | | |
| | | Physical sidelink shared channel 4 | | | Physical sidelink shared channel 4 |
| Physical sidelink shared channel 1 | | Physical sidelink shared channel 3 | Physical sidelink shared channel 1 | Physical sidelink shared channel 5 | |
| Slot 0 | | Slot 1 | | Slot 2 | |

Physical sidelink shared channel 1

Physical sidelink shared channel 3

FIG. 8

900

Sidelink resource determining apparatus

901

Determining module

FIG. 9

1000

Communication device

1001 Processor ⟷ Memory 1002

FIG. 10

1100

1101 Radio frequency unit

Network module 1102

1110

Memory 1109
Application program
Operating system

Audio output unit 1103

1104
Input unit
Graphics processing unit
Microphone

1108 Interface unit

Processor

1107
User input unit
Touch panel
Other input devices

1106
Display unit
Display panel

Sensor 1105

FIG. 11

## INTERNATIONAL SEARCH REPORT

| International application No. |
| --- |
| **PCT/CN2022/109660** |

**A. CLASSIFICATION OF SUBJECT MATTER**

H04W 72/02(2009.01)i

According to International Patent Classification (IPC) or to both national classification and IPC

**B. FIELDS SEARCHED**

Minimum documentation searched (classification system followed by classification symbols)

H04L 72/-

Documentation searched other than minimum documentation to the extent that such documents are included in the fields searched

Electronic data base consulted during the international search (name of data base and, where practicable, search terms used)

WCNABS; CNTXT; CNKI: 物理旁链路反馈信道, PSFCH, 资源, 映射, 规则, 周期, 配置, 位置, 静态, 动态; VEN; USTXT; WOTXT; EPTXT; 3GPP: PSFCH, resource, period, mapping, rule, configuration, static, dynamic, location

**C. DOCUMENTS CONSIDERED TO BE RELEVANT**

| Category* | Citation of document, with indication, where appropriate, of the relevant passages | Relevant to claim No. |
| --- | --- | --- |
| X | CN 111865504 A (BEIJING SAMSUNG COMMUNICATION TECHNOLOGY RESEARCH CO., LTD.) 30 October 2020 (2020-10-30) paragraphs [0086], [0205], [0220]-[0221], [0227], and [0245] | 1-2, 12-23, 26-31, 35-40 |
| X | CN 112788561 A (DATANG MOBILE COMMUNICATIONS EQUIPMENT CO., LTD.) 11 May 2021 (2021-05-11) description, paragraphs [0055]-[0063] | 1-2, 30-31, 36-40 |
| A | CN 113141663 A (VIVO COMMUNICATION TECHNOLOGY CO., LTD.) 20 July 2021 (2021-07-20) entire document | 1-40 |
| A | US 2020344722 A1 (SAMSUNG ELECTRONICS CO., LTD.) 29 October 2020 (2020-10-29) entire document | 1-40 |
| A | WO 2021023081 A1 (JRD COMMUNICATION SHENZHEN LTD.) 11 February 2021 (2021-02-11) entire document | 1-40 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 October 2022** | **07 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/109660**

| Patent document cited in search report | | | Publication date (day/month/year) | Patent family member(s) | | | Publication date (day/month/year) |
|---|---|---|---|---|---|---|---|
| CN | 111865504 | A | 30 October 2020 | KR | 20210149876 | A | 09 December 2021 |
| | | | | EP | 3949208 | A1 | 09 February 2022 |
| | | | | US | 2022210768 | A1 | 30 June 2022 |
| | | | | WO | 2020222568 | A1 | 05 November 2020 |
| CN | 112788561 | A | 11 May 2021 | None | | | |
| CN | 113141663 | A | 20 July 2021 | WO | 2021147864 | A1 | 29 July 2021 |
| US | 2020344722 | A1 | 29 October 2020 | KR | 20210145846 | A | 02 December 2021 |
| | | | | WO | 2020218892 | A1 | 29 October 2020 |
| | | | | CN | 113748628 | A | 03 December 2021 |
| | | | | EP | 3959837 | A1 | 02 March 2022 |
| | | | | EP | 3959837 | A4 | 18 May 2022 |
| | | | | IN | 202117053303 | A | 08 April 2022 |
| WO | 2021023081 | A1 | 11 February 2021 | CN | 114175803 | A | 11 March 2022 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110882833